# EUROPEAN PATENT APPLICATION

(11) **EP 4 369 508 A1**
(43) Date of publication of application: **15.05.2024**
(21) Application number: 22857879.5
(22) Date of filing: 18.08.2022
(51) Int. Cl.: H01M 50/531

(54) **ELECTRODE ASSEMBLY, BATTERY, AND ELECTRIC DEVICE**

(30) Priority: 19.08.2021 CN 202110955883
(71) Applicant: Ningde Amperex Technology Limited, Ningde, Fujian 352100 (CN)
(72) Inventor: HAO, Fei, Ningde, Fujian 352100 (CN)
(74) Representative: Icosa
(86) International application number: PCT/CN2022/113229
(87) International publication number: WO 2023/020568

(57) **Abstract**

Disclosed are an electrode assembly, a battery including such electrode assembly, and an electric device including such battery. The electrode assembly includes a first electrode plate, a second electrode plate, and a separator, where the first electrode plate is provided with a first tab and a third tab, the second electrode plate is provided with a second tab, and the first electrode plate, the separator, and the second electrode plate are wound to form the electrode assembly. The first electrode plate includes a first current collector and a first active substance layer. The first active substance layer is disposed on a surface of the first current collector to form a first coating region; the first tab and the third tab are spaced apart in the first coating region, dividing the first coating region into a first part, a second part, and a third part, and a length ratio of the first part, the second part, and the third part is 1:(0.5-1.5):(0.5-1.5). In this way, difference in resistance between adjacent tabs is reduced so as to take full advantage of the charging speed and reduced temperature rise, achieving purposes of increasing current flow capacity of the electrode assembly and reducing temperature rise in the electrode assembly.

## Description

### TECHNICAL FIELD

This application relates to the field of electrochemical apparatus technologies, and in particular, to an electrode assembly, a battery including such electrode assembly, and an electric device.

### BACKGROUND

With the application of 5G, consumers are having increasingly high requirements on battery performance in portable electronic products such as smart phones and tablet computers. Prior-art batteries and devices face the problem of high temperature rise, while an excessively high temperature degrades service performance of batteries and electronic products. Prior-art batteries employ a two-tabs structure, with which the overall current flow capacity of the battery cannot be increased. Therefore, temperature rise remains high for the battery and the device.

### SUMMARY

In view of the above, it is necessary to provide an electrode assembly, a battery including such electrode assembly, and an electric device so as to alleviate the above technical problem.

In some embodiments of this application provide an electrode assembly including a first electrode plate, a second electrode plate, and a separator, where the first electrode plate is provided with a first tab, the second electrode plate is provided with a second tab, the separator is disposed between the first electrode plate and the second electrode plate, and the first electrode plate, the separator, and the second electrode plate are wound to form the electrode assembly. The electrode assembly further includes a third tab, where the third tab is disposed at the first electrode plate. The first electrode plate includes a first current collector and a first active substance layer, where the first active substance layer is disposed on a surface of the first current collector to form a first coating region; the first active substance layer extends in the form of a strip in a first direction; and the first tab and the third tab are spaced apart in the first coating region. In a winding direction of the first electrode plate, the first coating region is divided into a first part, a second part, and a third part by the first tab and the third tab, and a length ratio of the first part, the second part, and the third part is 1:(0.5-1.5):(0.5-1.5), and preferably 1:(0.8-1.2):(0.8-1.2). In some embodiments of this application, the first direction is a length direction of the electrode plate in an unfolded state, and also a winding direction of the electrode assembly.

In this way, the electrode assembly has current divided with the additional third tab provided at the first electrode plate, and as the first tab and the third tab divide the first coating region according to the predetermined ratio, difference in resistance between adjacent tabs is reduced so as to take full advantage of the charging speed and reduced temperature rise, achieving purposes of increasing current flow capacity of the electrode assembly and reducing temperature rise in the electrode assembly.

In some embodiments, the first active substance layer is provided with a first groove and a third groove that are spaced apart, where the first tab is disposed in the first groove, the third tab is disposed in the third groove, a length of the first active substance layer in the first direction is L, and a distance between the first groove and the third groove is H, where |L/2-H| ≤ 100mm, and L ≥ 700mm. In this way, short circuit due to an excessively small distance between tabs can be reduced, and this also helps the first tab and the third tab divide the first coating region according to the predetermined ratio. The first groove and the third groove are formed by absence of the first active substance layer. According to an implementation of this application, the absence of the active substance layer may expose the current collector or another coating applied on a surface of the current collector.

In some embodiments, in a second direction, the first groove is through the first active substance layer, where the first groove may be formed on the first electrode plate in a way of gap coating, making it less difficult to manufacture the electrode plate. The second direction is perpendicular to the first direction. In an unfolded electrode plate, the second direction is a width direction of the electrode plate, which is also a length direction of the electrode assembly in a wound state.

In some embodiments, in a second direction, a first edge of the first groove is flush with a first side of the first current collector, and a second edge of the first groove is spaced apart from a second side of the first current collector, which helps to reduce loss of the active substance layer and maintain energy density of a cell assembly.

In some embodiments, in the first direction, a side of the first tab is spaced apart from a side of the first groove to reduce the probability of contact of the tab with the active substance.

In some embodiments, in the first direction, distance between the side of the first tab and the side of the first groove is 2-2.5 mm such that the first tab is mounted within a tolerance limit of the device with the less probability of contact of the tab with the active substance.

In some embodiments, in the first direction, width of the first tab is 6-8 mm and width of the first groove is 10-13 mm, thus reducing impact on energy density of a cell caused by excessive loss of the active substance.

In some embodiments, the first tab includes a first section and a second section, where the first section is disposed in the first groove and connected to the first current collector, and the second section is bent toward a side of the first current collector facing away from the first section, causing the bent tab to apply a pressure on the electrode plate. This helps to strengthen connection between the tab and the electrode plate and reduces the probability of separation of the tab from the electrode plate due to an external force.

In some embodiments, in a second direction, the first current collector includes a first side and a second side that are opposite each other, where the first tab protrudes from the first side, and the third tab protrudes from the second side. This makes the first tab and the third tab separately located at two opposite ends of the electrode assembly after the electrode assembly takes shape by winding, and shortens the distance between the first tab and the third tab in the first direction, facilitating development of small-sized batteries.

In some embodiments, the first tab and the third tab are formed by part of a side surface of the first current collector beyond the first current collector. Specifically, the first tab and the third tab may be formed by cutting the first current collector. In this way, a coverage area of the first active substance layer can be retained to the maximum extent, helping to increase energy density of the electrode assembly.

In some embodiments, the second electrode plate includes a second current collector and a second active substance layer, where the second active substance layer is disposed on a surface of the second current collector to form a second coating region, and the second tab is disposed in the second coating region.

In some embodiments, the second coating region is divided into a fourth part and a fifth part by the second tab, where in a winding direction of the second electrode plate, a length ratio of the fourth part and the fifth part is 1:(0.5-1.5), and preferably 1:(0.8-1.2), which helps to reduce difference in internal resistance between adjacent tabs.

In some embodiments, the electrode assembly further includes a fourth tab, where the fourth tab is disposed in the second coating region and spaced apart from the second tab, the second coating region is divided into a fourth part, a fifth part, and a sixth part by the second tab and the fourth tab, and in the winding direction of the second electrode plate, a length ratio of the fourth part, the fifth part, and the sixth part is 1:(0.5-1.5):(0.5-1.5), and preferably 1:(0.8-1.2):(0.8-1.2). In this way, current can be further divided, which reduces temperature rise in the electrode assembly.

In some embodiments, in a third direction, projections of the first tab, the second tab, and the third tab on a surface of the electrode assembly have no overlap, where the third direction is perpendicular to the first direction. In some embodiments of this application, the third direction is a thickness direction of the electrode assembly. Staggered arrangement of a plurality of tabs can alleviate uneven thickness of the electrode assembly caused by superposition of tab thickness, helping relieve deformation of the electrode assembly after a number of charge and discharge processes.

In some embodiments, in the third direction, adjacent tabs are separated by at least two layers of the first electrode plate or the second electrode plate, and preferably by four layers of electrode plate. This helps to prevent glue application at multiple locations on a single layer of the electrode plate which results in cyclic interfaces due to inconsistent interfaces of the electrode plate.

In some embodiments, the first electrode plate is a cathode plate, and the second electrode plate is an anode plate. The first active substance layer is provided on both of two opposite side surfaces of the current collector at the winding start end of the first electrode plate, causing a double-sided region to be formed at the winding start end of the first electrode plate. The second active substance layer is provided on neither of two opposite side surfaces of the current collector at the winding start end of the second electrode plate, causing an uncoated region to be formed at the winding start end of the second electrode plate. Such arrangement helps to reduce lithium precipitation.

In some embodiments, the winding start end of the first electrode plate and that of the second electrode plate are both double-sided regions, and the winding finish ends thereof are structures where a single-sided region transits to an uncoated region, which helps to keep balance between active substances on the two electrode plates and increase energy density of the electrode assembly.

In some embodiments of this application further provide a battery, where the battery includes a housing and the electrode assembly according to the foregoing embodiments, and the electrode assembly is disposed in the housing.

In some embodiments of this application further provide an electric device, where the electric device includes a circuit element and the battery according to the foregoing embodiments, and the circuit element is electrically connected to the battery. The electric device includes, but is not limited to, a mobile phone, a computer, a mobile terminal, and other electronic devices.

### BRIEF DESCRIPTION OF DRAWINGS

FIG. 1 is a schematic diagram of a winding structure of an electrode assembly as in an example.
FIG. 2 shows a front view and a side view of an unfolded structure of a first electrode plate in the electrode assembly shown in FIG. 1.
FIG. 3 shows a front view and a side view of an unfolded structure of a second electrode plate in the electrode assembly shown in FIG. 1.
FIG. 4 is a front view of the electrode assembly shown in FIG. 1.
FIG. 5 is a schematic structural diagram of two side surfaces of a first electrode plate and those of a second electrode plate in the electrode assembly shown in FIG 1 without any tab.
FIG. 6 is a schematic structural diagram of two side surfaces of a first electrode plate without any tab as in an example.
FIG. 7 is a schematic structural diagram of local connection between a tab and an electrode plate as in an example.
FIG. 8 is a schematic structural diagram of two side surfaces of a first electrode plate as in an example.
FIG. 9 is a schematic structural diagram of two side surfaces of a second electrode plate as in an example.
FIG. 10 is a schematic structural diagram of a winding structure of an electrode assembly including the electrode plates shown in FIG. 8 and FIG. 9.
FIG. 11 is a front view of the electrode assembly shown in FIG. 10.
FIG. 12 is a schematic structural diagram of two side surfaces of a first electrode plate as in an example.
FIG. 13 is a schematic structural diagram of two side surfaces of a second electrode plate as in an example.
FIG. 14 is a schematic diagram of a winding structure of an electrode assembly including the electrode plates shown in FIG. 12 and FIG. 13.
FIG. 15 is a front view of the electrode assembly shown in FIG. 14.
FIG. 16 is a schematic structural diagram of two side surfaces of a first electrode plate as in an example.
FIG. 17 is a schematic structural diagram of two side surfaces of a second electrode plate as in an example.
FIG. 18 is a schematic diagram of a winding structure of an electrode assembly including the electrode plates shown in FIG. 16 and FIG. 17.
FIG. 19 is a front view of the electrode assembly shown in FIG. 18.
FIG. 20 is a schematic structural diagram of an electrode assembly as in a comparative example.
FIG. 21 shows a front view and a side view of a first electrode plate in the electrode assembly shown in FIG. 20.
FIG. 22 shows a front view and a side view of a second electrode plate in the electrode assembly shown in FIG. 20.
FIG. 23 is a histogram of test results of internal resistance of adjacent tabs of the electrode assembly shown in FIG. 20.
FIG. 24 is a histogram of test results of internal resistance of adjacent tabs of the electrode assembly shown in FIG. 1.
FIG. 25 is a structural sketch of a battery as in an example.
FIG. 26 is a structural sketch of an electric device as in an example.

Reference signs of main components:

| | |
|---|---|
| Electrode assembly | 100, 200, 300, 400, 100' |
| First electrode plate | 10 |
| First current collector | 11 |
| First part | 111 |
| Second part | 112 |
| Third part | 113 |
| First side | 114 |
| Second side | 115 |
| First active substance layer | 12 |
| First groove | 121 |
| First edge | 1211 |
| Second edge | 1212 |
| Third groove | 122 |
| Second electrode plate | 20 |
| Second current collector | 21 |
| Fourth part | 211 |
| Fifth part | 212 |
| Sixth part | 213 |
| Second active substance layer | 22 |
| Second groove | 221 |
| Separator | 30 |
| First tab | 40 |
| First section | 41 |
| Second section | 42 |
| Second tab | 50 |
| Third tab | 60 |
| Fourth tab | 70 |
| Battery | 500 |
| Housing | 501 |
| Electric device | 600 |
| Circuit element | 601 |

### DESCRIPTION OF EMBODIMENTS

To make the objectives, technical solutions, and advantages of this application clearer and more comprehensible, the following further describes this application in detail with reference to the accompanying drawings and examples. It should be understood that the specific examples described herein are intended to explain rather than to limit this application.

In the descriptions of this application, it should be understood that the orientations or positional relationships indicated by the terms "center", "vertical", "transverse", "length", "width", "thickness", "upper", "lower", "front", "rear", "left", "right", "perpendicular", "horizontal", "top", "bottom", "inside", "outside", "clockwise", "counterclockwise", "axial", "radial", "circumferential", and the like are based on the orientations or positional relationships shown in the accompanying drawings, merely for the ease and brevity of description of this application and simplify the descriptions, without any indication or implication that the apparatuses or components mentioned must have specified orientations or must be constructed or operated in specified orientations, and therefore such terms shall not be construed as limitations on this application. In addition, the terms "first" and "second" are merely for the purpose of description, and shall not be understood as an indication or implication of relative importance or implicit indication of the number of indicated technical features. Therefore, a feature defined by "first" or "second" may explicitly or implicitly include one or more such features. In the descriptions of this application, "a plurality of" means two or more than two, unless otherwise specifically stated.

The following disclosure provides many different embodiments or examples for realizing different structures of this application. To simplify the disclosure of this application, the following describes components and configurations of specific examples. Certainly, they are just examples which are not intended to limit this application. In addition, this application may repeat reference numbers and/or reference letters in different examples. Such repetition is for simplicity and clarity without indicating relationships between various embodiments and/or configurations discussed.

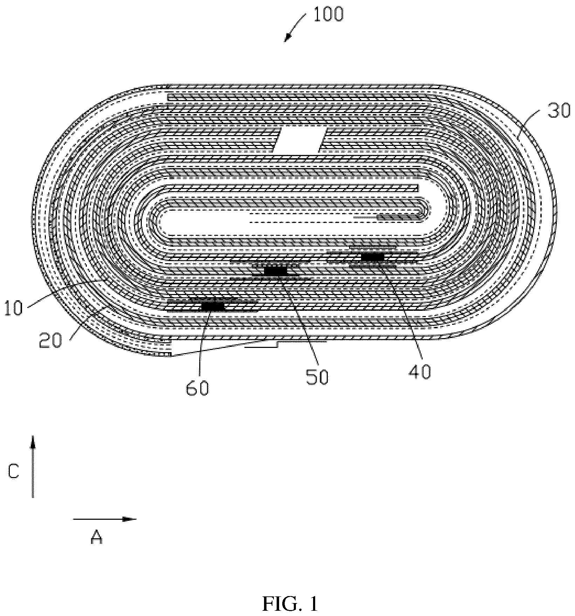

Referring to FIG. 1, FIG. 2, FIG.3, and FIG. 4, in a first example of this application, an electrode assembly 100 includes a first electrode plate 10, a second electrode plate 20, and a separator 30. The first electrode plate 10 and the second electrode plate 20 have opposite polarities. The separator 30 is disposed between the first electrode plate 10 and the second electrode plate 20. The first electrode plate 10, the separator 30, and the second electrode plate 20 are wound to form the electrode assembly 100. The first electrode plate 10 is provided with a first tab 40 and a third tab 60, where first tab 40, the third tab 60, and the first electrode plate 10 have a same polarity. The second electrode plate 20 is provided with a second tab 50, where the second tab 50 and the second electrode plate 20 have a same polarity. With the third tab 60 connected in parallel, the electrode assembly 100 of this application implements division of current flowing into it, so as to increase current flow capacity of the electrode assembly 100.

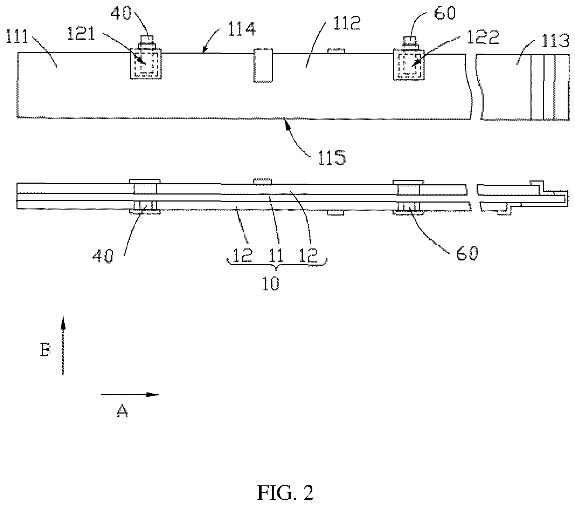

Specifically, referring to FIG. 2 again, the first electrode plate 10 includes a first current collector 11 and a first active substance layer 12, where the first active substance layer 12 is disposed on a surface of the first current collector 11 to form a first coating region. The first active substance layer 12 extends in the form of a strip in a first direction A; and the first tab 40 and the third tab 60 are spaced apart in the first coating region. In a winding direction of the first electrode plate 10, which is also a winding direction of the electrode assembly 100, the first coating region is divided into a first part 111, a second part 112, and a third part 113 by the first tab 40 and the third tab 60. A length ratio of the first part 111, the second part 112, and the third part 113 is 1:(0.5-1.5):(0.5-1.5), and preferably 1:(0.8-1.2):(0.8-1.2). In some embodiments of this application, the first direction A is a length direction of the electrode plate in an unfolded state, and also a winding direction of the electrode assembly 100.

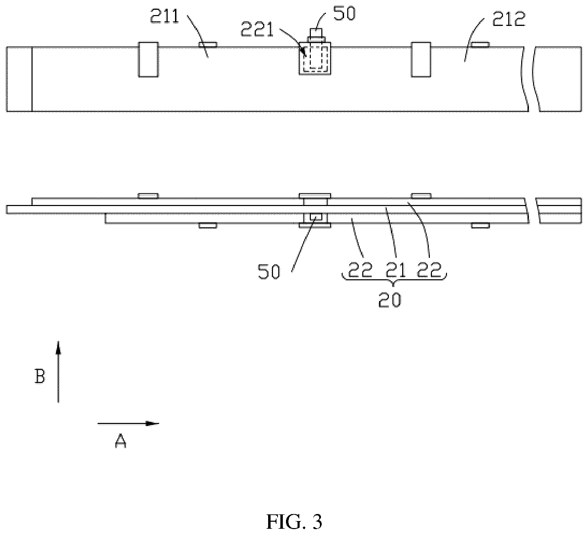

Further, referring to FIG. 3 again, the second electrode plate 20 includes a second current collector 21 and a second active substance layer 22, where the second active substance layer 22 is disposed on a surface of the second current collector 21 to form a second coating region, and the second tab 50 is disposed in the second coating region. The second coating region is divided into a fourth part 211 and a fifth part 212 by the second tab 50, where in a winding direction of the second electrode plate 20, which is also a winding direction of the electrode assembly 100, a length ratio of the fourth part 211 and the fifth part 212 is 1:(0.5-1.5), and preferably 1:(0.8-1.2).

In this way, the electrode assembly 100 has current divided with the additional third tab 60 provided at the first electrode plate 10, and as the first tab 40 and the second tab 50 divide length of the active substance layer of the first electrode plate 10 and the third tab 60 divides length of the active substance layer of the second electrode plate 20 according to the predetermined ratios, difference in resistance between adjacent tabs is reduced so that internal resistance between the adjacent tabs is roughly the same to take full advantage of the charging speed and reduced temperature rise, achieving purposes of increasing current flow capacity of the electrode assembly and reducing temperature rise in the electrode assembly.

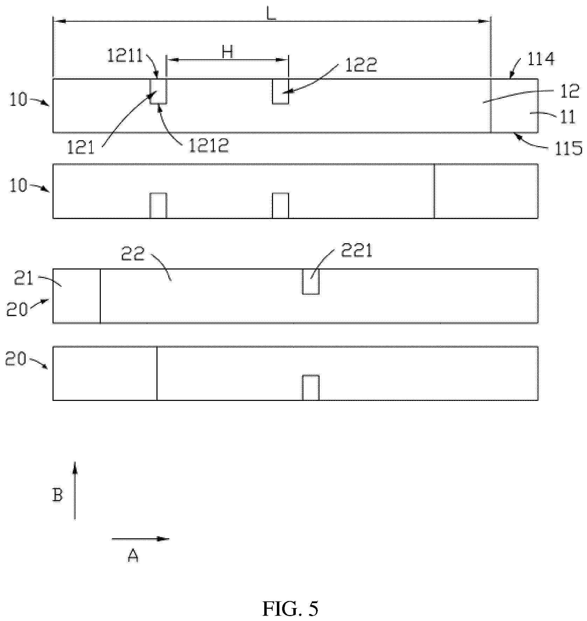

Referring to FIG. 2 and FIG. 5, the first active substance layer 12 is provided with a first groove 121 and a third groove 122 that are spaced apart, where the first tab 40 is disposed in the first groove 121 and the third tab 60 is disposed in the third groove 122. In the first direction A, length of the first active substance layer 12 is L and distance between the first groove 121 and the third groove 122 is H, where |L/2-H| ≤ 100 mm, and L ≥ 700 mm. Therefore, the probability of short circuit due to excessively small distance between tabs is lowered. In addition, this also helps the first tab 40 and the third tab 60 to divide the first coating region according to the predetermined ratio. The first groove 121 and the third groove 122 are formed by absence of the first active substance layer 12. According to one embodiment of this application, the absence of the first active substance layer 12 may expose the first current collector 11 or another coating on a surface of the first current collector 11.

The second active substance layer 22 is provided with a second groove 221, and the second tab 50 is provided in the second groove 221. In the first direction A, the second groove 221 is located approximately in the middle of the second active substance layer 22. The second groove 221 is formed by absence of the second active substance layer 22. According to one embodiment of this application, the absence of the second active substance layer 22 may expose the second current collector 21 or another coating on a surface of the second current collector 21.

In order to maintain uniformity of the active substance layer, the active substance layer is absent on both side surfaces of the current collector at positions corresponding to the groove. In other words, no active substance layer is present in either side surface of the current collectors at positions of the first groove 121, the second groove 221, and the third groove 122, where local uncoated regions are formed.

Further, in a second direction B, a first edge 1211 of the first groove 121 is flush with a first side 114 of the first current collector 11, and a second edge 1212 of the first groove 121 is spaced apart from a second side 115 of the first current collector 11, which helps to reduce loss of the active substance layer and maintain energy density of a cell assembly. The second direction B is perpendicular to the first direction A. When the electrode plate is in an unfolded state, the second direction B refers to a width direction of the electrode plate, which is also a length direction of the electrode assembly 100 in a wound state. The third groove 122 and the second groove 221 have approximately the same structure as the first groove 121, and further description is omitted herein.

In a manufacturing process of the first electrode plate 10 and the second electrode plate 20, after the active substance layer is applied onto a surface of the current collector, a chemical reagent may be applied at corresponding locations of the active substance layer to wash away part of the active substance, thus exposing the current collector to obtain the first groove 121, the second groove 221, and the third groove 122; or before the active substance layer is applied onto the current collector, adhesive tapes may be attached at the corresponding locations and after the active substance layer is applied onto the surface of the current collector, the adhesive tapes are torn off to expose the current collector, thus obtaining the first groove 121, the second groove 221, and the third groove 122.

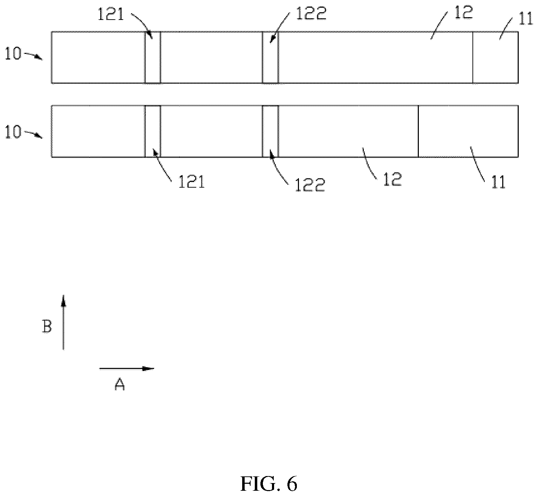

Referring FIG. 6, in an embodiment of this application, in a second direction B, the first groove 121 is through the first active substance layer 12. The first groove 121 may be formed on the first electrode plate 10 by gap coating. To be specific, the active substance layer is applied onto the surface of the current collector in an intermittent way by following a preset program so as to form a first groove 121, a third groove 122, and the like, which helps to make it less difficult to manufacture the electrode assembly.

Referring to FIG. 2 and FIG. 3 again, in the first direction A, a side of the first tab 40 and a side of the first groove 121 are spaced apart so as to reduce the probability of contact of the tab with the active substance. Specifically, distance between the side of the first tab 40 and the side of the first groove 121 is 2-2.5 mm such that the first tab 40 is mounted within a tolerance limit of the device with less probability of contact of the tab with the active substance. In some embodiments of this application, in the first direction A, width of the first tab 40 is 6-8 mm and width of the first groove 121 is 10-13 mm, thus reducing impact on energy density of a cell caused by excessive loss of the active substance. The second tab 50 and the third tab 60 has approximately the same size as the first tab 40, and the second groove 221 and the third groove 122 have approximately the same size as the first groove 121.

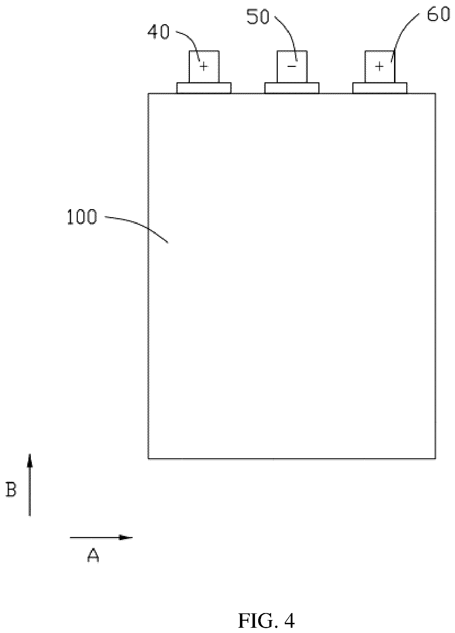

Referring to FIG. 4 again, in the first example, the first electrode 10 is a cathode plate and the second electrode plate 20 is an anode plate. After the electrode assembly 100 takes shape by winding, the first tab 40, the second tab 50, and the third tab 60 are at a same end of the electrode assembly 100, and the second tab 50 is separated between the first tab 40 and the third tab 60.

Further, in a third direction, projections of the first tab 40, the second tab 50, and the third tab 60 on a surface of the electrode assembly 100 have no overlap. The third direction C is perpendicular to the first direction A. In some embodiments of this application, the third direction C is a thickness direction of the electrode assembly 100. Staggered arrangement of a plurality of tabs can alleviate uneven thickness of the electrode assembly caused by superposition of tab thickness, helping relieve deformation of the electrode assembly after a number of charge and discharge processes. In the third direction C, adjacent tabs are separated by at least two layers of the first electrode plate 10 or the second electrode plate 20, and preferably by four layers of electrode plate. This helps to prevent glue application at multiple locations on a single layer of the electrode plate which results in cyclic interface due to inconsistent interfaces of the electrode plate.

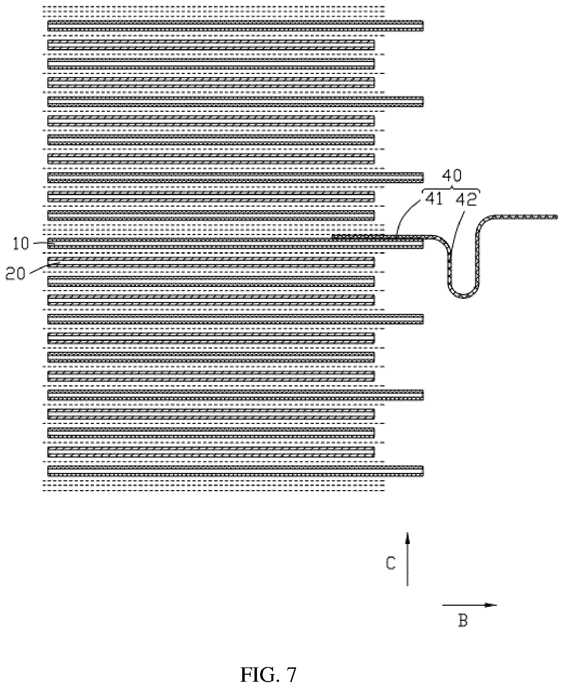

Referring to FIG. 2 and FIG. 7, further, the first tab 40 includes a first section 41 and a second section 42, where the first section 41 is disposed in the first groove 121 and connected to the first current collector 11, and the second section 42 is bent toward a side of the first current collector 11 facing away from the first section 41, causing the bent tab to apply a pressure on the electrode plate. This helps to strengthen connection between the tab and the electrode plate and reduces the probability of separation of the tab from the electrode plate due to an external force.

In some embodiments of this application, the first tab 40 and the third tab 60 may alternatively be formed by part of a side surface of the first current collector 11 beyond the first current collector 11. The second tab 50 may alternatively be formed by part of a side surface of the second current collector 21 beyond the second current collector 21. Specifically, the first tab 40 and the third tab 60 may be formed by cutting the first current collector 11, and the second tab 50 may be formed by cutting the second current collector 21. In this way, a coverage area of the first active substance layer 12 and a coverage area of the second active substance layer 22 can be retained to the maximum extent, helping to increase energy density of the electrode assembly 100.

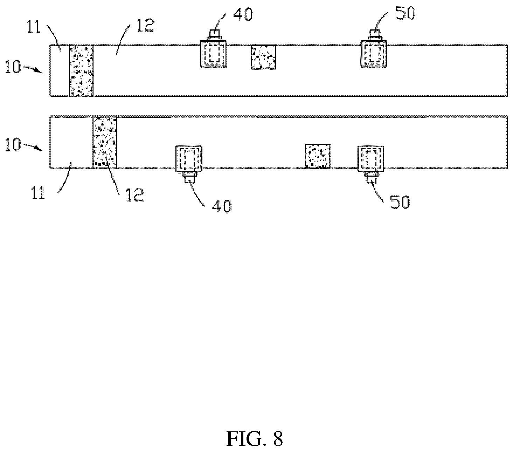

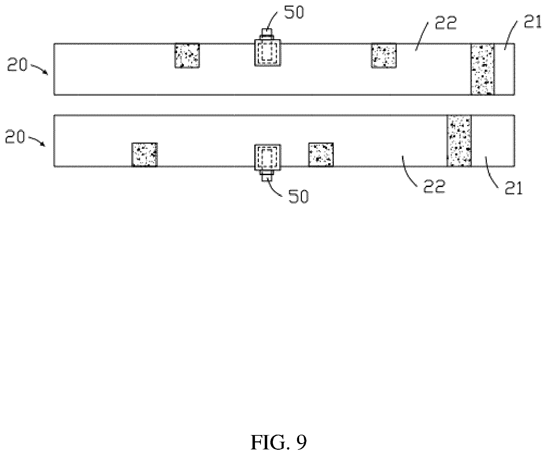

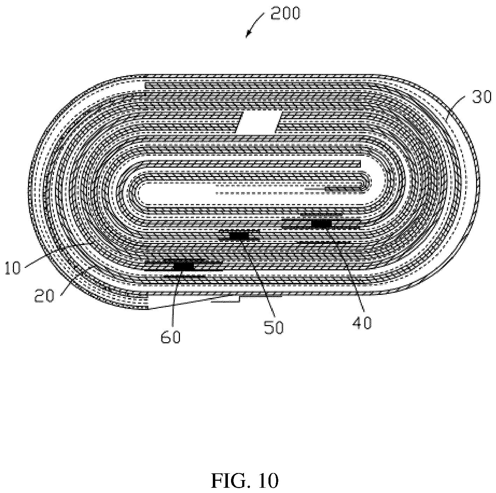

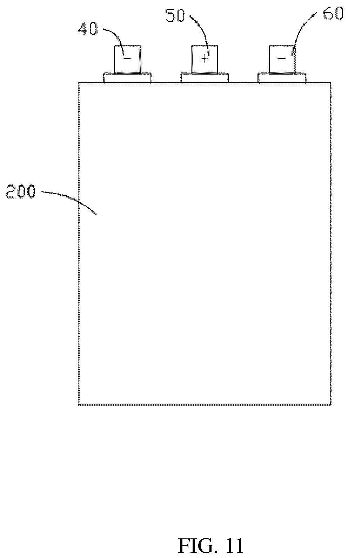

Referring to FIG. 8, FIG. 9, FIG. 10, and FIG. 11, the electrode assembly 200 in a second example is approximately the same as the electrode assembly 100 in the first example, except that in the second example, the first electrode plate 10 is an anode plate with the corresponding first tab 40 and third tab 60 being anode tabs, and the second electrode plate 20 is a cathode plate with the corresponding second tab 50 being a cathode tab. After the electrode assembly 200 takes shape by winding, the first tab 40, the second tab 50, and the third tab 60 are at a same end of the electrode assembly 200, and the second tab 50 is separated between the first tab 40 and the third tab 60.

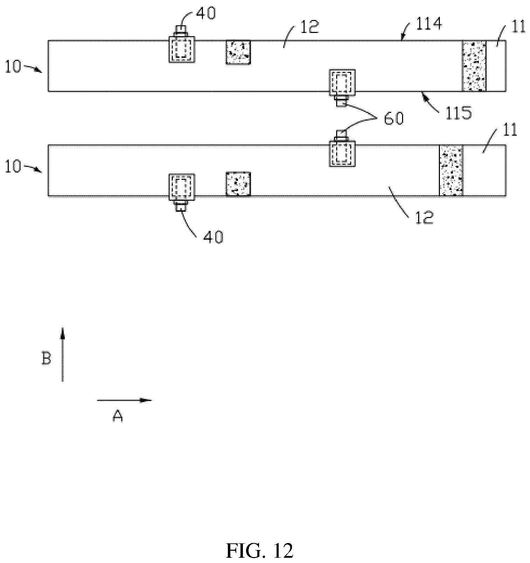

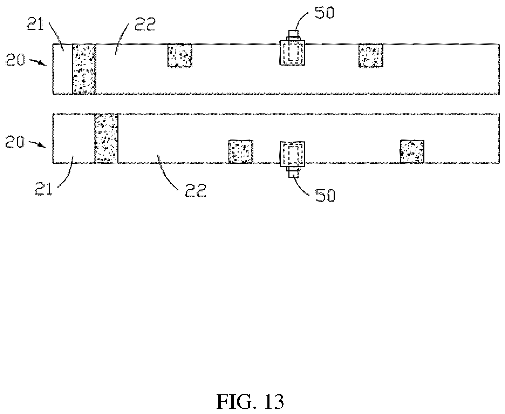

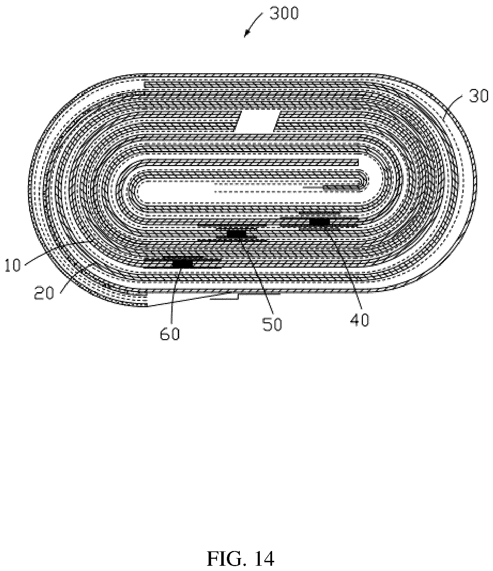

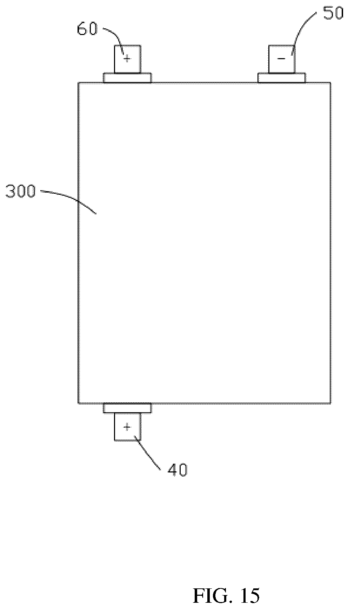

Referring to FIG. 12, FIG. 13, FIG. 14, and FIG. 15, the electrode assembly 300 in a third example is approximately the same as the electrode assembly 100 in the first example, except that in the third example, in the second direction B, the first tab 40 protrudes from the first side 114 of the first current collector 11, the third tab 60 protrudes from the second side 115 of the current collector 11, and the second tab 50 is disposed on the second electrode plate 20 in the same direction as the first tab 40. After the electrode assembly 300 takes shape by winding, the second tab 50 and the first tab 40 are at a same end of the electrode assembly 300, and the first tab 40 and the third tab 60 are separately located at two opposite ends of the electrode assembly 300, with the distance between the first tab 40 and the third tab 60 in the first direction A shortened, facilitating the development of small-sized batteries.

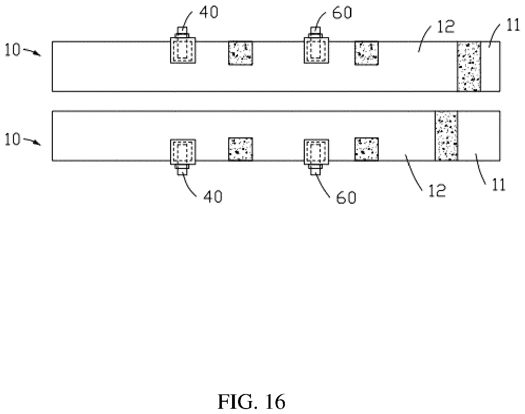

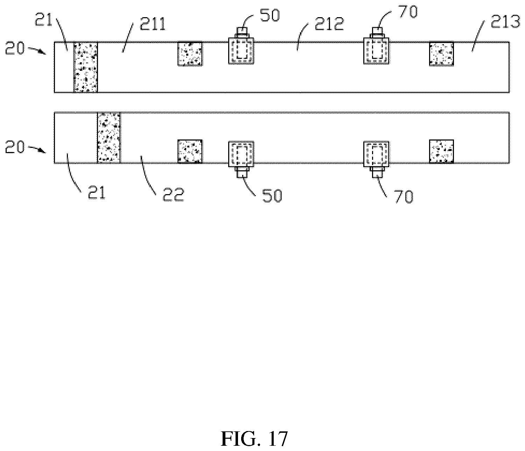

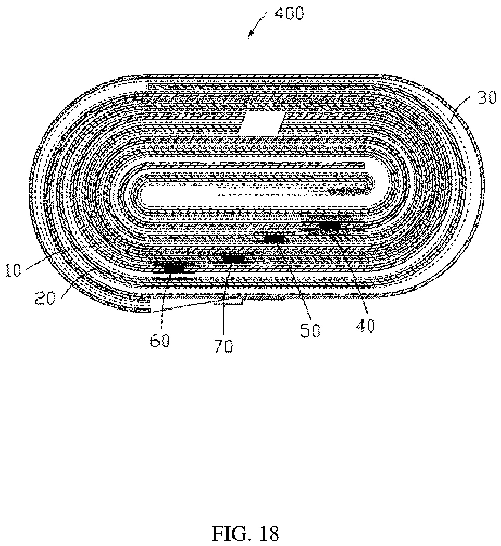

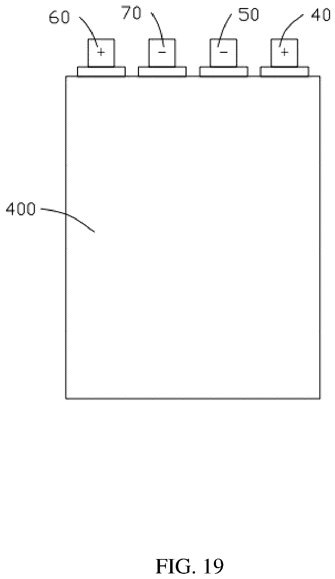

Referring to FIG. 16, FIG. 17, FIG. 18, and FIG. 19, the electrode assembly 400 in a fourth example is approximately the same as the electrode assembly 100 in the first example, except that in the fourth example, the electrode assembly 400 further includes a fourth tab 70, where the fourth tab 70 is disposed in the second coating region and spaced apart from the second tab 50. The second coating region is divided into a fourth part 211, a fifth part 212, and a sixth part 213 by the second tab 50 and the fourth tab 70, where in a winding direction of the second electrode plate, a length ratio of the fourth part 211, the fifth part 212, and the sixth part 213 is 1:(0.5-1.5):(0.5-1.5), and preferably 1:(0.8-1.2):(0.8-1.2). In this way, current can be further divided, which reduces temperature rise in the electrode assembly 400.

After the electrode assembly 400 takes shape by winding, the first tab 40, the second tab 50, the third tab 60, and the fourth tab 70 are at a same end of the electrode assembly 400, and the second tab 50 and the fourth tab 70 are separated between the first tab 40 and the third tab 60.

In some embodiments of this application, the first electrode plate 10 is an anode plate, and the second electrode plate 20 is a cathode plate. The first active substance layer 12 is provided on both of two opposite side surfaces of the current collector at the winding start end of the first electrode plate 10, causing a double-sided region to be formed at the winding start end of the first electrode plate 10. The second active substance layer 22 is provided on neither of two opposite side surfaces of the current collector at the winding start end of the second electrode plate 20, causing an uncoated region to be formed at the winding start end of the second electrode plate 20. Such arrangement helps to reduce lithium precipitation inside the electrode assembly.

In some embodiments of this application, the winding start end of the first electrode plate 10 and that of the second electrode plate 20 are both double-sided regions, and the winding finish ends thereof are structures where a double-sided region transits to an uncoated region, which helps to keep balance between active substances on the two electrode plates and increase energy density of the electrode assembly.

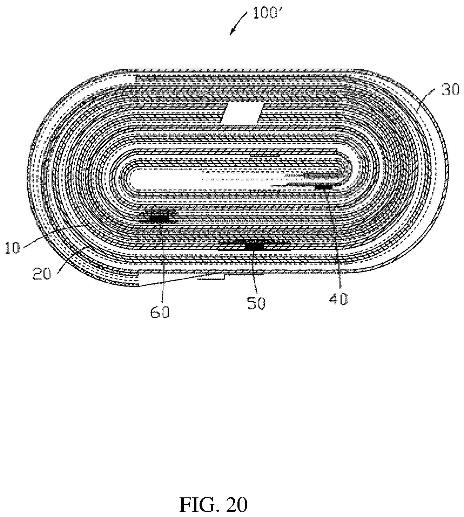

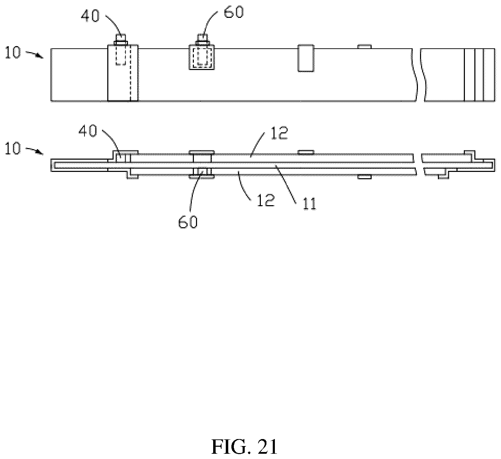

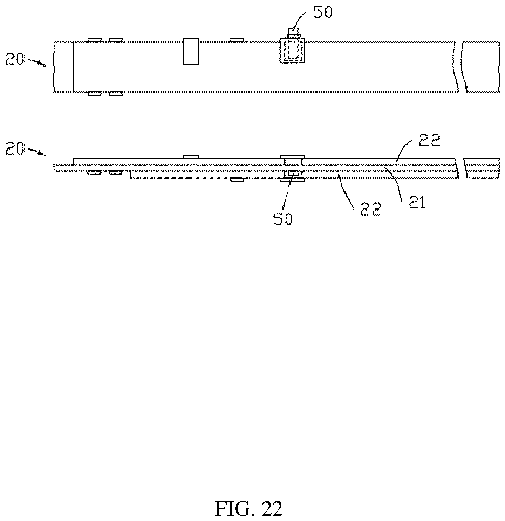

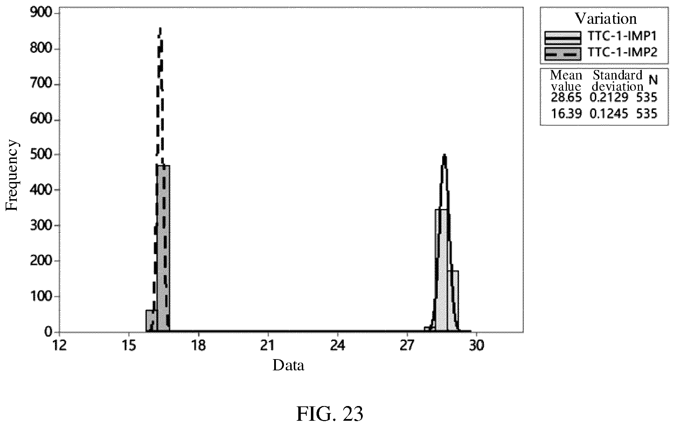

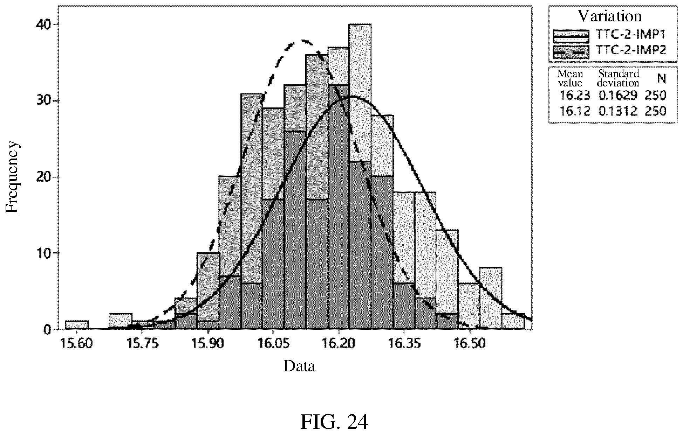

Referring FIG. 20, FIG. 21 and FIG. 22, the electrode assembly 100' in a first comparative example is substantially the same as the electrode assembly 100 in the first example except that, in the first comparative example, the first tab 40 is disposed in an uncoated region at a winding start end of the first electrode plate 10, the third tab 60 is disposed in the first coating region of the first electrode plate 10, and the first tab 40 and the third tab 60 do not divide the first coating region according to a predetermined ratio. According to FIG. 23, internal resistance differs greatly between adjacent tabs after the electrode assembly 100' takes shape by winding. Referring to FIG. 24, as compared with the first comparative example, after the electrode assembly 100 takes shape by winding, difference in internal resistance between adjacent tabs is reduced significantly.

Test results of charging and temperature rise of the electrode assembly 100 in the first example and the electrode assembly 100' in the first comparative example under a same charging scheme are given in the table below.

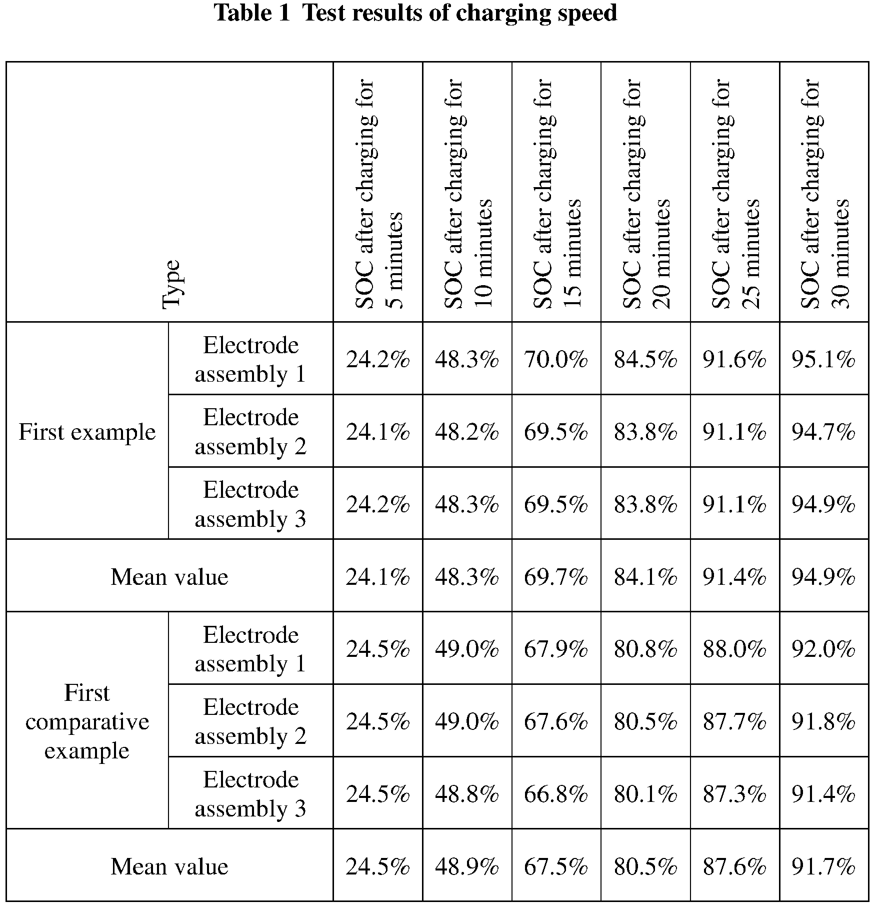

It can be learned from the data in Table 1 that the charging speed within 30 minutes of the electrode assembly 100 in the first example is 3.2% higher than that of the first comparative example. This proves that in the electrode assembly 100 in the first example with the first tab 40 and the third tab 60 provided in the first coating region according to the predetermined ratio, difference in internal resistance between adjacent tabs is reduced, which can effectively increase current flow capacity of the electrode assembly 100, thereby increasing charging speed of the electrode assembly 100.

**Table 2 Test results of temperature rise**

| Charge scheme | Type | Number | Temperature at tab edge (°C) | Temperature of main part (°C) | Remarks |
|---|---|---|---|---|---|
| 13A CC to 2min, 12A CC to 2min, 10A CC to 5min, 2C CC to 4.35V, CV to 1.5C, 1.5 CC to 4.43, CV to 0.025C | First comparative example | Electrode assembly 1 | 45.5 | 46.9 | Box included |
| | | Electrode assembly 2 | 45.7 | 46.7 | |
| | | Electrode assembly 3 | 44.9 | 46.2 | |
| | | Mean value | 45.4 | 46.6 | |
| | First example | Electrode assembly 1 | 41.3 | 42.2 | |
| | | Electrode assembly 2 | 41.6 | 42.3 | |
| | | Electrode assembly 3 | 41.6 | 42.7 | |
| | | Mean value | 41.5 | 42.4 | |

It can be learned from the data in Table 2 that the temperature rise in the electrode assembly 100 in the first example is 4.2°C lower than that of the first comparative example. This proves that in the electrode assembly 100 in the first example, with the first tab 40 and the third tab 60 provided in the first coating region according to the predetermined ratio, difference in internal resistance between adjacent tabs is reduced, which can effectively reduce temperature rise in the electrode assembly 100, thereby enhancing safety of the electrode assembly 100.

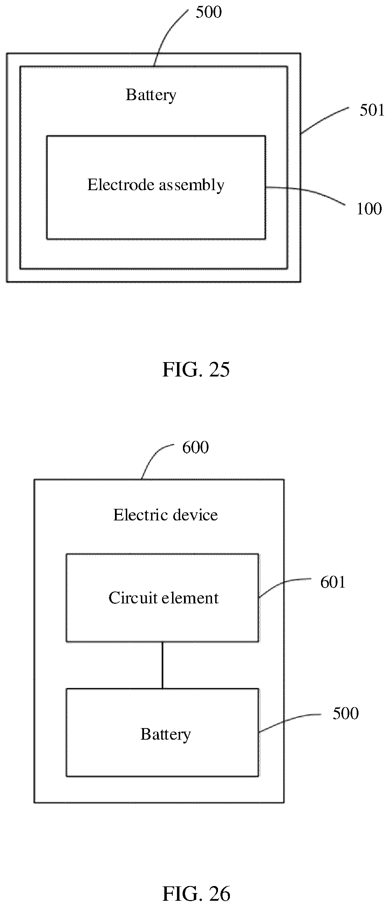

Referring to FIG. 25, some embodiments of this application further provide a battery 500, where the battery 500 includes a housing 501 and the electrode assembly according to any one of the preceding embodiments, and the electrode assembly is disposed in the housing 501.

Referring to FIG. 26, some embodiments of this application further provide an electric device 600, where the electric device 600 includes a circuit element 601 and the battery 500 according to the foregoing embodiments, and the circuit element 601 is electrically connected to the battery 500. The electric device 600 includes, but is not limited to, electronic devices such as mobile phones, computers, and mobile terminals.

It is apparent for persons skilled in the art that this application is not limited to the details of the foregoing illustrative embodiments, and can be implemented in other specific forms without departing from the spirit or basic features of this application. Therefore, the embodiments shall, in whatever aspect, be considered as being illustrative rather than limitative. The scope of this application is defined by the appended claims rather than the above description, and therefore all variations falling within the meaning and scope of the claims and their equivalents are intended to be encompassed in this application.

The foregoing embodiments are merely intended to describe the technical solutions of this application, but not intended to constitute any limitation. Although this application has been described in detail with reference to preferred embodiments, persons of ordinary skill in the art should understand that modifications or equivalent replacements can be made to the technical solutions of this application without departing from the spirit and scope of the technical solutions of this application.

## Claims

1. An electrode assembly, comprising
a first electrode plate, wherein the first electrode plate is provided with a first tab;
a second electrode plate, wherein the second electrode plate is provided with a second tab; and
a separator, disposed between the first electrode plate and the second electrode plate, wherein the first electrode plate, the separator, and the second electrode plate are wound to form the electrode assembly; **characterized in that**,
the electrode assembly further comprises a third tab, the third tab being disposed on the first electrode plate;
the first electrode plate comprises a first current collector and a first active substance layer, wherein the first active substance layer is disposed on a surface of the first current collector to form a first coating region; the first active substance layer extends in the form of a strip in a first direction; and the first tab and the third tab are spaced apart in the first coating region; and
in a winding direction of the first electrode plate, the first coating region is divided into a first part, a second part, and a third part the first tab and the third tab, and a length ratio of the first part, the second part, and the third part is 1:(0.5-1.5):(0.5-1.5).

2. The electrode assembly according to claim 1, **characterized in that**, a first groove and a third groove are spaced apart in the first active substance layer, wherein the first tab is disposed in the first groove, the third tab is disposed in the third groove, and in the first direction, a length of the first active substance layer is L and a distance between the first groove and the third groove is H, wherein |L/2-H| ≤ 100 mm, and L ≥ 700 mm; and
the first groove and the third groove are formed by absence of the first active substance layer.

3. The electrode assembly according to claim 2, **characterized in that**, in a second direction, the first groove is through the first active substance layer, wherein the second direction is perpendicular to the first direction.

4. The electrode assembly according to claim 2, **characterized in that** in a second direction, a first edge of the first groove is flush with a first side of the first current collector and a second edge of the first groove is spaced apart from a second side of the first current collector, wherein the second direction is perpendicular to the first direction.

5. The electrode assembly according to claim 2, **characterized in that** in the first direction, a side of the first tab is spaced apart from a side of the first groove.

6. The electrode assembly according to claim 5, **characterized in that** in the first direction, a distance between the side of the first tab and the side of the first groove is 2-2.5 mm.

7. The electrode assembly according to claim 5, **characterized in that** in the first direction, a width of the first tab is 6-8 mm and a width of the first groove is 10-13 mm.

8. The electrode assembly according to claim 2, **characterized in that** the first tab comprises a first section and a second section, wherein the first section is disposed in the first groove and connected to the first current collector, and the second section is bent toward a side of the first current collector facing away from the first section.

9. The electrode assembly according to claim 1, **characterized in that** in a second direction, the first current collector comprises a first side and a second side that are opposite to each other, wherein the first tab protrudes from the first side and the third tab protrudes from the second side.

10. The electrode assembly according to claim 1, **characterized in that** the first tab and the second tab are formed by part of a side surface of the first current collector beyond the first current collector.

11. The electrode assembly according to claim 1, **characterized in that** the second electrode plate comprises a second current collector and a second active substance layer, wherein the second active substance layer is disposed on a surface of the second current collector to form a second coating region, and the second tab is disposed in the second coating region.

12. The electrode assembly according to claim 11, **characterized in that** the second coating region is divided into a fourth part and a fifth part by the second tab, wherein in a winding direction of the second electrode plate, a length ratio of the fourth part and the fifth part is 1:(0.5-1.5).

13. The electrode assembly according to claim 11, **characterized in that** the electrode assembly further comprises a fourth tab, wherein the fourth tab is disposed in the second coating region and spaced apart from the second tab, the second coating region is divided into a fourth part, a fifth part, and a sixth part by the second tab and the fourth tab, and in the winding direction of the second electrode plate, a length ratio of the fourth part, the fifth part, and the sixth part is 1:(0.5-1.5):(0.5-1.5).

14. The electrode assembly according to claim 1, **characterized in that** in a third direction, projections of the first tab, the second tab, and the third tab on a surface of the electrode assembly have no overlap, wherein the third direction is perpendicular to the first direction.

15. The electrode assembly according to claim 14, **characterized in that** in the third direction, adjacent tabs are separated by at least two layers of the first electrode plate or the second electrode plate.

16. A battery, **characterized in that** the battery comprises a housing and the electrode assembly according to any one of claims 1 to 15, wherein the electrode assembly is disposed in the housing.

17. An electric device, **characterized in that** the electric device comprises a circuit element and the battery according to claim 16, wherein the circuit element is electrically connected to the battery.
